## Europäisches Patentamt

## European Patent Office

## Office européen des brevets

(11) Publication number: **0 090 170**

**B1**

(12) **EUROPEAN PATENT SPECIFICATION**

(45) Date of publication of patent specification: **26.11.86**

(21) Application number: **83101575.5**

(22) Date of filing: **18.02.83**

(51) Int. Cl.⁴: **H 01 G 4/38, H 01 G 4/32, H 03 H 1/00**

(54) **Capacitive circuit filter.**

(30) Priority: **30.03.82 IT 4571582**
**07.07.82 IT 4572282**

(43) Date of publication of application:
**05.10.83 Bulletin 83/40**

(45) Publication of the grant of the patent:
**26.11.86 Bulletin 86/48**

(84) Designated Contracting States:
**AT BE CH DE FR GB IT LI NL SE**

(56) References cited:
**FR-A-2 015 974**
**GB-A-2 026 241**
**US-A-3 651 548**

(73) Proprietor: **Zanussi Elettromeccanica S.p.A.**
**Via Giardini Cattaneo 3**
**I-33170 Pordenone-C.P. 147 (IT)**

(72) Inventor: **De Faveri, Americo**
**Via Campelli**
**I-32013 Longarone Belluno (IT)**
Inventor: **Zanvettor, Sergio**
**Via di Sopra 54**
**I-32010, Ospitale di Cadore Belluno (IT)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Courier Press, Leamington Spa, England.

# Description

This invention relates to a capacitive circuit filter, particularly of the T configuration type, adapted for example to be employed for eliminating disturbances occurring during operation of electrical apparatus with the danger of repercussion into the electric power supply network. A filter of this type comprises at least two Y-type capacities connected between the respective phases of the electric power supply and ground, and at least two X-type capacities connected between the phases of the electric power supply.

Already described, for example in EP—A—0081060 filed on Oct. 7, 1982 in the name of the present applicant, is an arrangement employing coiled capacitors formed of a single coil comprising a continuous metallic coating and a discontinuous metallic coating separated from one another by a dielectric and forming a plurality of capacitors having at least one common armature.

An arrangement of this type requires specialized and highly complicated machinery for forming the discontinuous metallic layer, particularly if it is intended to obtain a greater number of capacitors for establishing a more sophisticated circuit.

Also known, for example from IT—A—869944 and IT—A—929180, are capacitive circuit filters comprising a combination of capacitors formed by providing the coatings with suitable incisions so as to obtain a capacitive circuit of the desired configuration. These filters are normally formed by winding a metallized dielectric web onto a disk or a drum having a large diameter for forming a parent capacitor which is then subdivided into the required capacities, with the incisions being formed contemporaneously or subsequently for obtaining individual capacitive circuit filters.

This solution presents certain difficulties with regard to the formation of the incisions which may cause separation of the various layers. In order to avoid this danger it is required to employ highly complicated incision-forming apparatus.

In addition there are certain difficulties with regard to the insulation along the borders and between adjacent capacitors, with the possibility of short-circuits between armatures at different potentials, particularly in the case of high voltages being applied.

It is therefore required to provide additional insulation by conventional methods, whereby the manufacture of such filters is rendered more complicated and expensive. Normally a finishing encapsulation of the filters in a resin is resorted to, which also serves to convey the necessary structural strength to the filter.

It is the object of the present invention to provide a capacitive circuit filter of the coiled type which satisfies the indispensable requirements as to electric insulation and structural strength without necessitating the employ of complicated machinery and of supplementary processing steps for its manufacture.

According to the invention, this object is attained by a capacitive circuit filter formed by coiling at least one first web of a dielectric material provided with at least one continuous metallic coating leaving the lateral borders of the web uncovered, and at least one second web of a dielectric material provided with at least two continuous metallic coatings extending up to the lateral borders of the web and separated from one another by a zone which is free of metallic coating.

A filter of this type is principally characterized in that there is provided at least one first incision extending from one end face of the coil at least into the separation zone between the metallic coatings of the second web.

These and further characteristics of the invention will become more clearly evident from the following description of exemplary embodiments with reference to the accompanying drawings, wherein:

Fig. 1 shows a diagrammatic cross-sectional view of the metal-coated webs employed for the filter according to the invention,

Fig. 2 shows a diagrammatic elevational view of a first embodiment of a filter according to the invention,

Fig. 3 shows a diagrammatic top plan view of the filter of Fig. 2,

Fig. 4 shows an electric circuit diagram of the filter of Fig. 2,

Fig. 5 shows a diagrammatical elevational view of a second embodiment of a filter according to the invention,

Fig. 6 shows a diagrammatic top plan view of the filter of Fig. 5,

Fig. 7 shows an electric circuit diagram of the filter of Fig. 5,

Fig. 8 shows a diagrammatic cross-sectional view of a modification of the metal-coated webs of Fig. 1,

Fig. 9 shows a diagrammatic elevational view of a filter in a further embodiment of the invention, and

Fig. 10 shows a diagrammatic top plan view of the filter of Fig. 9.

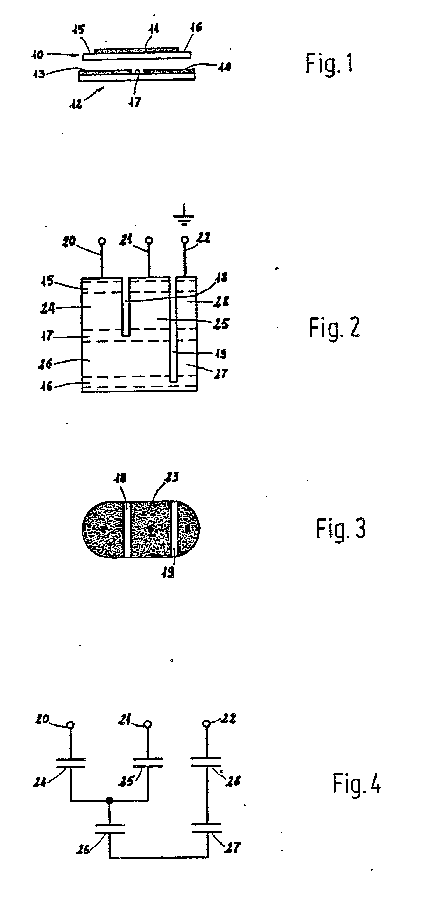

As shown in Figs. 1 and 2, the filter according to the invention is formed by coiling a first dielectric web 10 provided with a continuous metal coating 11 on one of its surfaces, and a second dielectric web 12 provided on one of its surfaces with two continuous metal coatings 13, 14 separated from one another.

The metallic coating 11 extends over the surface of web 10 so as to leave two lateral border zones 15, 16 thereof uncovered, whereas the metallic coatings 13, 14 on web 12 extend up to the lateral borders thereof, being separated from one another by a non-coated separation zone 17.

After the metal-coated webs 10, 12 have been coiled in the manner described, the body of the capacitor thus obtained is provided with at least two incisions 18, 19 extending parallel to the axis of the filter coil.

The incision 18 is formed, preferably by milling, between two terminals 20 and 21 provided for connection to the phases of the electric supply circuit, and extends downwards from the respective end face of the coil into the separation zone 17 between the coatings 13 and 14 of web 12. The incision 19 is formed between terminals 20, 21 on the one hand, and a terminal 22 on the other, provided for connection to ground, and extends to the level of the opposite non-coated border zone 16 of web 10.

In a final step for completing the filter, the two end faces of the coil are provided with a metal coating 23 (Fig. 3), and the terminals 20, 21 and 22 are attached to one of said end faces so as to be connected to one and the same metal coating 13 or 14 of web 12.

The electric circuit diagram of the filter shown in Fig. 2 and manufactured in the manner described is shown in Fig. 4. As shown therein, the filter comprises two X-type capacities 24, 25 connected in series between the two terminals 20 and 21 for connection to the electric supply source, and three Y-type capacities 26, 27 and 28 connected in series with one another and the respective one of capacities 24 or 25 between terminals 20, 21 and ground terminal 22.

By employing a coil formed of webs provided with a different number and/or arrangement of metal coatings, it is obviously possible to obtain capacitive circuit filters having different characteristics without leaving the scope of the invention. In particular, it is possible to obtain filters having a greater number of series-connected capacities so as to improve the insulation to ground, for instance. It is also possible to form capacitive circuits of the star-delta type by employing also the short-circuited end face of the filter for external connection. It is further possible to modify the values of the capacities by varying the volume of the individual sections of the coil, such as by varying the position and/or width of the incisions 18 and 19.

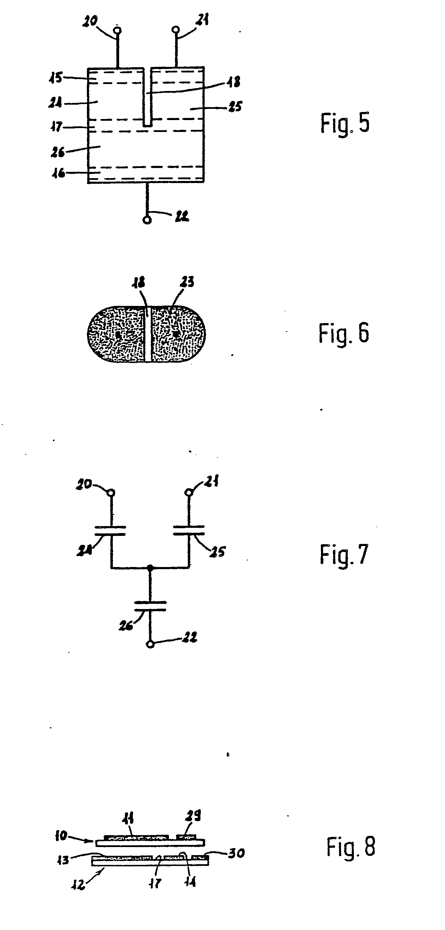

A simplified practical embodiment of the filter according to the invention may be obtained in the form of the modification shown in Figs. 5 and 6, comprising a single coil formed of the metal-coated webs 10 and 12 of Fig. 1.

In the body of the coil thus obtained, only a single incision 18 is formed between the terminals 20 and 21. The incision 18 extends parallel to the axis of the coil from one end face thereof into the separation zone 17 between the metal coatings 13 and 14 of web 12.

For completion of the filter, the two end faces of the coil are provided with a metallic coating, and the terminals 20 and 21 are attached to the end face formed with the incision 18, while the ground terminal 22 is attached to the opposite end face. Fig. 7 shows the circuit diagram of this modification, comprising two X-type capacities connected in series between terminals 20 and 21 for connection to the electric power supply. In addition, a Y-type capacity 26 is connected between terminals 20, 21 and ground terminal 22 in series with the respective capacity 24 or 25. In the modification described, the values of the individual capacities may be varied independently of the characteristics of the single incision 18 by varying the widths of the metallic coatings 11 and 13, 14, respectively, on webs 10 and 12.

As already indicated, the coil of the filter may of course be formed of dielectric webs having different numbers of metal coatings.

As shown in Fig. 8, for example, web 10 may be provided with a second continuous metal coating 29 adjacent to but separate from coating 11. In the same manner, web 12 may be provided with a third metal coating 30 adjacent to but separate from coating 14, extending up to the respective edge of web 12 for connection to ground terminal 22.

From the above description it is evident that by practicing a single incision 18, as in Fig. 5, in a coil formed of the webs shown in Fig. 8, one obtains a capacitive circuit filter having the same circuit diagram as shown in Fig. 4, in which the values of the individual capacities may be determined as described above.

In particular, the incision 18 extends into the coil from the end face thereof adajcent metal coating 13 of web 12 and into the separation zone 17, so as not to exert any influence on the Y-type capacities 26, 27 and 28.

In the embodiments described, the metal coatings of the webs are cleanly severed at the location of the respective incisions, which are preferably formed by milling, as already explained. This results in the creation of numerous short circuit points between the metal coatings at these locations. In the case that an autoregeneration phenomenon occurs in the zones of the filter adjacent the incisions, the autoregeneration current is substantially increased due to the presence of the numerous short circuit points, which may lead to the dielectric webs being burnt, resulting in undesirable changes of the parameters of the entire filter.

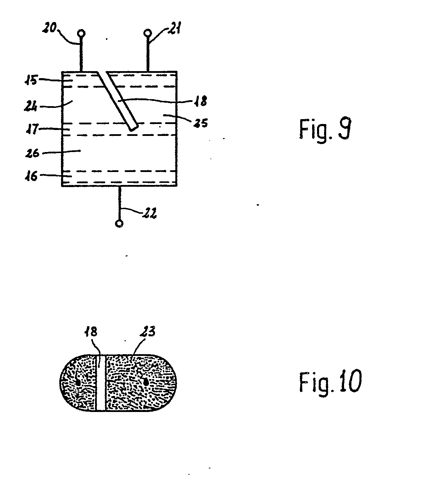

This drawback is reduced to a minimum in the embodiment shown in Figs. 9 and 10, wherein the capacitive filter is obtained for instance by coiling the metal-coated webs 10 and 12 of Fig. 1 and by practicing the at least one incision 18 in a direction substantially oblique with respect to the axis of the coil. The incision is preferably formed by the traditional milling technique, with the oblique orientation of the plane of the milling tool with respect to the axis of the coil resulting in the metal coatings of the webs being severed in an irregular manner adjacent the location of the incision.

As a consequence, there are only very few short circuit points between adjacent metal coatings along the borders of the incision, so that any autoregeneration phenomena occurring between the metal coatings are restricted to substantially limited current values. This results in any burning of the dielectric webs being substantially eliminated.

The filter according to the invention is completed by providing both end faces of the coil with a short-circuiting metal coating and attaching the terminals 20 and 21 to the end face formed with the incision 18, while the ground terminal 22 is attached to the opposite end face.

As already explained, the coil of this filter may of course be formed by employing dielectric webs having a different number and/or arrangement of metal coatings.

It is also within the scope of the invention to vary the location, the length, the width and/or the inclination of the incision 18.

In any case, it is to be understood that the filter according to the invention may be formed with numerous different circuit arrangements, possibly by combining the various embodiments described, without leaving the scope of the invention as defined in the appended claims.

## Claims

1. A capacitive circuit filter comprising a coil formed of at least one first web of a dielectric material provided with at least one continuous metal coating leaving the lateral borders of the web uncovered, and at least one second web of a dielectric material provided with at least two continuous metal coatings extending up to the lateral borders of the web and separated from one another by a separation zone which is free of metal coating, characterized in that there is provided at least one first incision (18) extending from one end face of said coil at least to the separation zone (17) between the metal coatings (13, 14) of the second web (12).

2. A capacitive circuit filter according to claim 1, characterized in that said incision (18) is oriented at a substantially oblique angle with respect to the axis of said coil.

3. A capacitive circuit filter according to claim 1, characterized in that there is provided at least one second incision (19) extending from one end face of said coil at least to the separation zone (17) between the metal coatings (13, 14) of the second web (12).

4. A capacitive circuit filter according to claim 3, characterized in that said first incision (18) extends from one end face of said coil to the separation zone (17) between the metal coatings (13, 14) of the second web (12), while the second incision (19) extends from the same end face to the opposite non-coated border (16) of the first web (10).

5. A capacitive circuit filter according to claim 4, wherein the terminals destined for connection to the phases of an electric supply circuit and the terminal intended for connection to ground are attached to the same end face of the coil, characterized in that the first incision (18) is practiced between the terminals (20, 21) destined for connection to the phases of the electric supply circuit, while the second incision (19) is practiced between the two said terminals (20, 21) on the one hand, and the ground terminal (22) on the other.

## Patentansprüche

1. Ein kapazitives Schaltungsfilter, enthaltend einen Wickel, der aus wenigstens einer ersten Bahn aus einem dielektrischen Material, die mit wenigstens einer durchgehenden Metallbeschichtung versehen ist, die die Seitenränder der Bahn unbedeckt läßt, und wenigstens einer zweiten Bahn aus einem dieleketrischen Material besteht, die mit zwei durchgehenden Metallbeschichtungen versehen ist, die sich bis zu den Seitenrändern der Bahn erstrecken und voneinander durch eine Trennzone, die frei von Metallbeschichtung ist, getrennt sind, dadurch gekennzeichnet, daß wenigstens ein erster Einschnitt (18) vorgesehen ist, der sich von einer Stirnfläche des Wickels bis wenigstens zur Trennzone (17) zwischen den Metallbeschichtungen (13, 14) der zweiten Bahn (12) erstreckt.

2. Ein kapazitives Schaltungsfilter nach Anspruch 1, dadurch gekennzeichnet, daß der Einschnitt (18) unter einem im wesentlichen schrägen Winkel in bezug auf die Achse des Wickels verläuft.

3. Ein kapazitives Schaltungsfilter nach Anspruch 1, dadurch gekennzeichnet, daß wenigstens eine zweiter Einschnitt (19) vorgesehen ist, der sich von einer Stirnseite des Wickels bis wenigstens zur Trennzone (17) zwischen den Metallbeschichtungen (13, 14) der zweiten Bahn (12) erstreckt.

4. Ein kapazitives Schaltungsfilter nach Anspruch 3, dadurch gekennzeichnet, daß der erste Einschnitt (18) sich von einer Stirnseite des Wickels bis zur Trennzone (17) zwischen den Metallbeschichtungen (13, 14) der zweiten Bahn (12) erstreckt, während der zweite Einschnitt (19) sich von derselben Stirnseite bis zum entgegengesetzten, nicht beschichteten Rand (16) der ersten Bahn (10) erstreckt.

5. Ein kapazitives Schaltungsfilter nach Anspruch 4, bei dem die für den Anschluß an die Phasen eines elektrischen Stromversorgungskreise bestimmten Anschlüsse und der zum Anschluß an Erde bestimmte Anschluß an derselben Stirnseite des Wickels befestigt sind, dadurch gekennzeichnet, daß der erste Einschnitt (18) zwischen den Anschlüssen (20, 21), die zum Anschluß der zwei Phasen des elektrischen Stromversorgungskreises bestimmt sind, angebracht ist, während der zweite Einschnitt (19) zwischen den zwei Anschlüssen (20, 21) einerseits und dem Erdanschluß (22) andererseits angebracht ist.

## Revendications

1. Un filtre de circuit capacitif comprenant un enroulement formé d'au moins une première feuille d'une matière diélectrique pourvue d'au moins un revêtement métallique continu laissant dégagés les bords latéraux de la feuille, et d'au moins une seconde feuille d'une matière diélectrique pourvue d'au moins deux revêtements métalliques continus s'étendant jusqu'aux bords latéraux de la feuille et séparés l'un de l'autre par une zone de séparation qui est exempte de revêtement métallique, caractérisé en ce qu'au moins une première incision (18) est réalisée de

7

0 090 170

8

manière à s'étendre depuis une face extrême dudit enroulement jusqu'au moins à la zone de séparation (17) entre les revêtements métalliques (13, 14) de la seconde feuille (12).

2. Un filtre de circuit capacitif selon la revendication 1, caractérisé en ce que ladite incision (18) est orientée d'un angle sensiblement en oblique par rapport à l'axe dudit enroulement.

3. Un filtre de circuit capacitif selon la revendication 1, caractérisé en ce qu'il est prévu au moins une seconde incision (19) s'étendant depuis une face extrême dudit enroulement au moins jusqu'à la zone de séparation (17) entre les revêtements métalliques (13, 14) de la seconde feuille (12).

4. Un filtre de circuit capacitif selon la revendication 3, caractérisé en ce que ladite première incision (18) s'étend depuis une face extrême dudit enroulement jusqu'à la zone de séparation (17) entre les revêtements métalliques (13, 14) de la seconde feuille (13), tandis que la seconde incision (19) s'étend depuis la même face extrême jusqu'au bord opposé non-revêtu (16) de la première feuille (10).

5. Un filtre de circuit capacitif selon la revendication 4, dans lequel les bornes destinées à établir la connexion avec les phases d'un circuit d'alimentation électrique et la borne destinée à établir la connexion à la masse sont fixées sur la même face extrême de l'enroulement, caractérisé en ce que la première incision (18) est réalisée entre les bornes (20, 21) destinées à établir la connexion avec les phases du circuit d'alimentation électrique, tandis que la seconde incision (19) est réalisée entre, d'une part, les deux bornes précitées (20, 21) et d'autre part, la borne de masse (22).

0 090 170

Fig. 1

Fig. 2

Fig. 3

Fig. 4

Fig. 5

Fig. 6

Fig. 7

Fig. 8

Fig. 9

Fig. 10